(19) Europäisches Patentamt
European Patent Office
Office européen des brevets

(11) EP 3 922 761 B1

(12) **EUROPEAN PATENT SPECIFICATION**

(45) Date of publication and mention of the grant of the patent:
**08.07.2026 Bulletin 2026/28**

(21) Application number: **20752381.2**

(22) Date of filing: **05.02.2020**

(51) International Patent Classification (IPC):
***C25B 13/08*** *(2006.01)* ***C25B 9/00*** *(2021.01)*
***B01D 69/00*** *(2006.01)* ***C25B 9/23*** *(2021.01)*

(52) Cooperative Patent Classification (CPC):
**C25B 13/08; B01D 67/002; B01D 69/02; B01D 69/1071; B01D 69/1213; B01D 71/26; B01D 71/32; B01D 71/36; B01D 71/5222; B01D 71/82; C25B 1/04; C25B 9/19; C25B 9/23; C25B 11/054; C25B 11/075;** (Cont.)

(86) International application number:
**PCT/JP2020/004423**

(87) International publication number:
**WO 2020/162511 (13.08.2020 Gazette 2020/33)**

(54) **MEMBRANE ELECTRODE ASSEMBLY AND WATER-ELECTROLYSIS DEVICE**
MEMBRANELEKTRODENEINHEIT UND WASSERELEKTROLYSEVORRICHTUNG
ASSEMBLAGE MEMBRANE-ÉLECTRODE ET DISPOSITIF D'ÉLECTROLYSE DE L'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.02.2019 JP 2019021696**

(43) Date of publication of application:
**15.12.2021 Bulletin 2021/50**

(73) Proprietor: **AGC INC.**
**Chiyoda-ku,**
**Tokyo 1008405 (JP)**

(72) Inventors:
- **SUMIKURA, Kosuke**
**Tokyo 100-8405 (JP)**
- **HAYABE, Shintaro**
**Tokyo 100-8405 (JP)**
- **NISHIO, Takuo**
**Tokyo 100-8405 (JP)**

(74) Representative: **Müller-Boré & Partner Patentanwälte PartG mbB**
**Friedenheimer Brücke 21**
**80639 München (DE)**

(56) References cited:
**WO-A1-01/06586**
**WO-A1-2018/070444**
**JP-A- 2018 159 129**
**JP-A- H0 598 486**
**JP-A- H06 306 193**
**JP-A- S59 172 524**
**TW-A- 201 840 907**
**US-A1- 2020 102 662**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
**C25B 13/02;** B01D 2325/04; B01D 2325/14;
B01D 2325/42; Y02E 60/36

## Description

### TECHNICAL FIELD

The present invention relates to a membrane electrode assembly and a water electrolysis apparatus.

### BACKGROUND ART

A membrane electrode assembly containing a polymer electrolyte membrane can be applied to various applications, and various studies have been made. For example, the membrane electrode assembly is applied to a polymer electrolyte water electrolysis apparatus (Patent Document 1) or a polymer electrolyte fuel cell (Patent Document 2).

Patent Document 3 describes a laminate that can improve work efficiency in updating an electrode in an electrolytic cell and can express excellent electrolytic performance even after updating.

Patent Document 4 discloses an electrode for electrolysis, a laminate, a wound body, an electrolyzer, a method for producing an electrolyzer, a method for renewing an electrode, a method for renewing a laminate, and a method for producing a wound body.

Patent Document 5 discloses a cation exchange membrane having a reinforcing cloth made of a perfluoropolymer fiber with an improved stability of mass-production without lowering the strengths of the membrane by embedding a, specified woven fabric in the anode-side surface of the membrane and peeling it from the membrane.

### PRIOR ART DOCUMENTS

### PATENT DOCUMENTS

| | |
|---|---|
| Patent Document 1: | JP-A-H11-021687 |
| Patent Document 2: | JP-A-2005-78895 |
| Patent Document 3: | JP-A-2018-159129 |
| Patent Document 4: | TW 201 840 907 A |
| Patent Document 5: | JP-A-H06-306193 |

### DISCLOSURE OF INVENTION

### TECHNICAL PROBLEM

The membrane electrode assembly used in the water electrolysis apparatus as described in Patent Document 1 may have a case where a large pressure is exerted on the membrane electrode assembly partitioning an anode chamber and a cathode chamber, as compared with the membrane electrode assembly used in the polymer electrolyte fuel cell as described in Patent Document 2. Therefore, the membrane electrode assembly is required to have excellent strength.

Further, in order to suppress power consumption and obtain a target product at a lower cost, the resistance of the polymer electrolyte membrane itself is required to be low. The low resistance of the polymer electrolyte membrane itself means that the electrolysis voltage decreases.

In view of the above circumstances, it is an object of the present invention to provide a membrane electrode assembly which is excellent in strength and is capable of reducing the electrolysis voltage when applied to a water electrolysis apparatus, and such a water electrolysis apparatus.

### SOLUTION TO PROBLEM

As a result of extensive studies on the above problem, the present inventors have found that, in a membrane electrode assembly containing a polymer electrolyte membrane, if the polymer electrolyte membrane contains a fluorinated polymer and a woven fabric having a predetermined aperture ratio and composed of yarns with predetermined denier numbers, and the ion exchange capacity of the fluorinated polymer and the membrane thickness of the polymer electrolyte membrane satisfy a predetermined relationship, it is possible to obtain a desired effect, and thus have arrived at the present invention.

That is, the present inventors have found that the above problem can be solved by the present invention as

defined in the appended set of claims.

ADVANTAGEOUS EFFECTS OF INVENTION

According to the present invention, it is possible to provide a membrane electrode assembly which is excellent in strength and is capable of reducing the electrolysis voltage when applied to a water electrolysis apparatus, and such a water electrolysis apparatus.

BRIEF DESCRIPTION OF DRAWINGS

Fig. 1 is a cross-sectional view showing an example of the membrane electrode assembly of the present invention.
Fig. 2 is a cross-sectional view showing an example of a polymer electrolyte membrane contained in the membrane electrode assembly of the present invention.
Fig. 3 is a plan schematic view showing an example where a woven fabric contained in the polymer electrolyte membrane in the present invention is viewed toward the membrane thickness direction of the polymer electrolyte membrane.
Fig. 4 is a partial cross sectional view for illustrating the measurement position of the membrane thickness of the polymer electrolyte membrane in the present invention.
Fig. 5 is a graph showing the relationship between the membrane thickness Y of the polymer electrolyte membrane and the ion exchange capacity X of the fluorinated polymer in each of the membrane electrode assemblies prepared in Examples and Comparative Examples.

DESCRIPTION OF EMBODIMENTS

The following definitions of terms apply throughout the specification and claims, unless otherwise specified.

An "ion exchange group" is a group capable of exchanging at least part of ions contained in this group into other ions, and, for example, the following sulfonic acid type functional group or carboxylic acid type functional group may be mentioned.

A "sulfonic acid type functional group" means a sulfonic acid group ($-SO_3H$) or a sulfonate group ($-SO_3M^2$, where $M^2$ is an alkali-metal or quaternary ammonium cation).

A "carboxylic acid type functional group" means a carboxylic acid group (-COOH) or a carboxylate group ($-COOM^1$, where $M^1$ is an alkali-metal or quaternary ammonium cation).

A "precursor membrane" is a membrane containing a polymer having groups capable of being converted to ion exchange groups.

A "group capable of being converted to an ion exchange group" is meant for a group which can be converted to an ion exchange group by treatment such as hydrolysis treatment or conversion treatment for acid type.

A "group capable of being converted to a sulfonic acid type functional group" is meant for a group which can be converted to a sulfonic acid type functional group by treatment such as hydrolysis treatment or conversion treatment for acid type.

A "group capable of being converted to a carboxylic acid type functional group" is meant for a group which can be converted to a carboxylic acid type functional group by a known treatment such as hydrolysis treatment or conversion treatment for acid type.

A "unit" in a polymer means an atomic group derived from 1 molecule of a monomer, formed by polymerization of the monomer. The unit may be an atomic group formed directly by a polymerization reaction, or may be an atomic group in which a portion of the atomic group has been converted to another structure by treating a polymer obtained by a polymerization reaction.

The numerical range represented by " to " means a range including the numerical values described before and after " to " as the lower limit value and the upper limit value.

[Membrane electrode assembly]

The membrane electrode assembly of the present invention is a membrane electrode assembly to be used in a water electrolysis apparatus, comprising an anode having a catalyst layer, a cathode having a catalyst layer, and a polymer electrolyte membrane disposed between the anode and the cathode, wherein the polymer electrolyte membrane comprises a fluorinated polymer having ion exchange groups (hereinafter referred to also as a "fluorinated polymer (I)") and a woven fabric, the aperture ratio of the woven fabric is at least 50%, the denier number of warp yarns and the

denier number of weft yarns constituting the woven fabric are each independently at least 15 and at most 50, and the relation of Y≦240X-170 (hereinafter referred to also as the relational formula Y1) is satisfied, where the membrane thickness of the polymer electrolyte membrane is Y μm, and the ion exchange capacity of the fluorinated polymer is X meq/g dry resin. The membrane thickness Y of the polymer electrolyte membrane is at least 70 μm and at most 150 μm. The density of the warp yarns and weft yarns constituting the woven fabric is at least 28 yarns/cm (70 yarns/inch) and at most 59.1 yarns/cm (150 yarns/inch).

The membrane electrode assembly of the present invention can achieve both excellent strength and reduction in electrolysis voltage when applied to a water electrolysis apparatus. The details of this reason are not clarified, but it is presumed to be due to the following reason.

As a method of improving the membrane strength of a membrane electrode assembly, a method of using a polymer electrolyte membrane containing a woven fabric may be mentioned. In particular, it is preferred to use a woven fabric composed of yarns having predetermined denier numbers, since it is thereby possible to improve the membrane strength. However, in a case where a woven fabric is present in the polymer electrolyte membrane, there may be a case where the membrane resistance of the polymer electrolyte membrane is improved, whereby the electrolysis voltage becomes high. With respect to this problem, the present inventors have found it possible to reduce the electrolysis voltage by using a woven fabric having a predetermined aperture ratio.

Further, when studies have been conducted by the present inventors, it has been found that, if the ion exchange capacity of the fluorinated polymer and the membrane thickness of the polymer electrolyte membrane satisfy a predetermined relation, it is possible to satisfy both the improvement of the membrane strength and the reduction of the electrolysis voltage at a higher level.

That is, the present inventors have found that, when the ion exchange capacity of the fluorinated polymer increases, although the electrolysis voltage decreases, the strength of the polymer electrolyte membrane tends to decrease. Further, it has been found that, if the membrane thickness of the polymer electrolyte membrane is increased, the strength of the polymer electrolyte membrane is improved, but the electrolysis voltage tends to be high. Based on these findings, paying attention to the ion exchange capacity of the fluorinated polymer and the membrane thickness of the polymer electrolyte membrane, the present inventors have introduced the above-mentioned relational formula Y1 from the experimental results of Examples and Comparative Examples as shown in the Examples section as described later, in order to achieve both excellent membrane strength and reduction of the electrolysis voltage.

Thus, by using the membrane electrode assembly satisfying the above-mentioned relational formula Y1 while using the woven fabric having predetermined physical properties, it has been made possible to achieve both excellent strength and reduction in electrolysis voltage when applied to a water electrolysis apparatus.

Further, the polymer electrolyte membrane contained in the membrane electrode assembly of the present invention has a woven fabric having a predetermined aperture ratio composed of yarns having predetermined denier numbers. Therefore, in a case where the polymer electrolyte membrane is transferred from a dry state to a wet state in an application to a water electrolysis apparatus, the dimensional stability of the polymer electrolyte membrane is also excellent.

Fig. 1 is a cross-sectional view showing an example of the membrane electrode assembly of the present invention. The membrane electrode assembly 20 comprises an anode 22 having a catalyst layer 26 and a gas diffusion layer 28, a cathode 24 having a catalyst layer 26 and a gas diffusion layer 28, and a polymer electrolyte membrane 10 disposed between the anode 22 and the cathode 24 in contact with the catalyst layers 26.

<Polymer electrolyte membrane>

Fig. 2 is a cross-sectional view showing an example of a polymer electrolyte membrane contained in the membrane electrode assembly of the present invention.

The polymer electrolyte membrane 10 comprises an electrolyte 12 containing a fluorinated polymer (I), and a woven fabric 14 disposed in the electrolyte 12. The woven fabric 14 is composed of a yarn 14a, a yarn 14b and a yarn 14c.

The membrane thickness Y [μm] of the polymer electrolyte membrane and the ion exchange capacity X [meq/g dry resin] of the fluorinated polymer (I) satisfy the relational formula Y1 (Y≦240X-170).

As described above, the relational formula Y1 is a formula obtained from the experimental results of Examples and Comparative Examples as shown in the Examples section as described later. The membrane electrode assembly satisfying the relational formula Y1 is excellent in strength and can reduce the electrolysis voltage when applied to the water electrolysis apparatus.

Although the membrane thickness Y of the polymer electrolyte membrane may be suitably set so as to satisfy the above-described relational formula Y1, from the viewpoint of further improving the strength of the membrane electrode assembly, it is at least 70 μm.

The upper limit value of the membrane thickness Y of the polymer electrolyte membrane is, from the viewpoint that the electrolysis voltage can be further reduced when applied to the water electrolysis apparatus, at most 150 μm,

preferably at most 130 μm.

The method for calculating the membrane thickness Y of a polymer electrolyte membrane in the present invention will be described.

First, after the polymer electrolyte membrane is dried at 90°C for 2 hours, the polymer electrolyte membrane is cut in a direction parallel to the membrane thickness direction of the polymer electrolyte membrane, and an enlarged image (e.g. 100 times) of a cross section of the polymer electrolyte membrane by an optical microscope (product name "BX-51", manufactured by Olympus Corporation) is taken. Here, at the time of cutting the polymer electrolyte membrane, cutting is conducted along a direction parallel to the direction in which either of the warp yarns or the weft yarns constituting the woven fabric in the polymer electrolyte membrane extend, and between the selected yarns.

Using Fig. 3, the cutting position of the polymer electrolyte membrane will be described more specifically. Fig. 3 is a plan schematic view when the woven fabric 14 in the polymer electrolyte membrane 10 is viewed toward the membrane thickness direction. As shown in Fig. 3, the woven fabric 14 comprises a yarn 14a, a yarn 14b and a yarn 14c which are warp yarns, and a yarn 14A, a yarn 14B and a yarn 14C which are weft yarns orthogonal to the warp yarns. In the example of Fig. 3, the polymer electrolyte membrane 10 is cut in a direction along the weft yarns and at the A-A' line located between the yarn 14A and the yarn 14B selected from the weft yarns. Thus, a cross section of the polymer electrolyte membrane 10 as shown in Fig. 2 is exposed.

Then, using an enlarged image, adjacent optional two yarns present in the cross-section, are selected. And, at each point advanced by 1/10 of the distance between them from the center of one of the selected 2 yarns towards the center of the other, the membrane thickness of the polymer electrolyte membrane is measured (here, the last point is the center of the other yarn, and the membrane thickness at this point is not measured). The membrane thickness at each point thus obtained is arithmetically averaged. However, when the thickness of the yarn is included in the membrane thickness, the membrane thickness measured at this point is not included in the calculation.

Using the example of Fig. 4, the measuring positions of the membrane thickness of a polymer electrolyte membrane will be described more specifically. Fig. 4 is a partial sectional view for illustrating the measurement positions of the membrane thickness of a polymer electrolyte membrane 10. In the example of Fig. 4, the adjacent yarns 14a and 14b are selected among the yarns in Fig. 2. As shown in Fig. 4, the membrane thickness t1 to the membrane thickness t9 are measured at points excluding point c10 being the last point, among points c1 to c10, which have advanced by 1/10 in the distance from point c0, which is the center of the yarn 14a, towards point c10, which is the center of the yarn 14b. Of the measured membrane thicknesses t1 to t9, the arithmetic average value of the seven thicknesses in total of the membrane thickness t2 to the membrane thickness t8, is obtained excluding the membrane thickness t1 including the thickness of the yarn 14a and the membrane thickness t9 including the thickness of the yarn 14b.

Such calculation of the membrane thickness is carried out in cross-sections at different 10 positions of the polymer electrolyte membrane, and the arithmetic average value of the membrane thicknesses at the 10 positions is taken as the membrane thickness Y.

(Woven fabric)

The aperture ratio of the woven fabric is at least 50%, and from such a viewpoint that it is possible to further reduce the electrolysis voltage of the water electrolysis apparatus, it is preferably at least 55%, particularly preferably at least 60%.

The upper limit value of the aperture ratio of the woven fabric is preferably at most 90%, particularly preferably at most 80%, from such a viewpoint that the strength of the membrane electrode assembly will be more excellent.

The aperture ratio of the woven fabric is calculated by the following formula (ε) based on the average diameter R1 of the yarns and the average distance P1 between adjacent yarns (hereinafter referred to also as "pitch P1").

Here, the average diameter R1 of the yarns means an arithmetic average value of the diameters of different 10 yarns, which are optionally selected, based on an enlarged image (e.g. 100 times) of the surface of the woven fabric obtained by using a microscope. Further, the pitch P1 means an arithmetic average value of 10 distances of different positions optionally selected, based on an enlarged image (e.g. 100 times) of the surface of the woven fabric obtained by using a microscope.

$$\text{Aperture ratio of woven fabric (\%)} = [P1/(P1+R1)]^2 \times 100 \qquad (\varepsilon)$$

The denier number of the warp yarns and the denier number of the weft yarns, constituting the woven fabric, are each independently at least 15, from such a viewpoint that the strength and dimensional stability of the membrane electrode assembly will be more excellent.

The upper limit values of the denier number of the warp yarns and the denier number of the weft yarns, constituting the woven fabric, are each independently at most 50, from such a viewpoint that it is thereby possible to further

reduce the electrolysis voltage of the water electrolysis apparatus.

Here, the denier number is a value (g/9,000 m) in which the mass of a yarn of 9,000 m is expressed in grams.

The density of the warp yarns and the weft yarns is at least 28 yarns/cm (70 yarns/inch), from the viewpoint of excellent strength and dimensional stability of the membrane electrode assembly, and is at most 59.1 yarns/cm (150 yarns/inch), from such a viewpoint that it is thereby possible to further reduce the electrolysis voltage of the water electrolysis apparatus.

The warp yarn and the weft yarn may be composed of a monofilament consisting of 1 filament, or a multifilament consisting of 2 or more filaments, and a monofilament is preferred.

The warp yarns and weft yarns are preferably composed of a material selected from the group consisting of a polytetrafluoroethylene (hereinafter referred to also as "PTFE"), a tetrafluoroethylene-perfluoroalkyl vinyl ether copolymer (hereinafter referred to also as "PFA"), a polyether ether ketone (hereinafter referred to also as "PEEK"), and a polyphenylene sulfide (hereinafter referred to also as "PPS"), from the viewpoint of superior durability of the yarns.

The warp yarns and weft yarns are preferably constructed of slit yarns from the viewpoint of the better durability and strength of the yarns.

In the woven fabric, it is preferred that the warp yarns and the weft yarns are orthogonal to each other.

In a case where the material constituting the woven fabric is PTFE, the weight of the woven fabric is preferably from 20 to 40 $g/m^2$, particularly preferably from 30 to 40 $g/m^2$, from such a viewpoint that the balance between the strength of the polymer electrolyte membrane and the handling efficiency will be excellent.

In a case where the material constituting the woven fabric is PFA, the weight of the woven fabric is preferably from 10 to 30 $g/m^2$, particularly preferably from 10 to 20 $g/m^2$, from such a viewpoint that the balance between the strength of the polymer electrolyte membrane and the handling efficiency will be excellent.

In a case where the material constituting the woven fabric is PEEK, the weight of the woven fabric is preferably from 5 to 40 $g/m^2$, particularly preferably from 5 to 30 $g/m^2$, from such a viewpoint that the balance between the strength of the polymer electrolyte membrane and the handling efficiency will be excellent.

In a case where the material constituting the woven fabric is PPS, the weight of the woven fabric is preferably from 5 to 40 $g/m^2$, particularly preferably from 5 to 30 $g/m^2$, from such a viewpoint that the balance between the strength of the polymer electrolyte membrane and the handling efficiency will be excellent.

(Electrolyte)

The electrolyte contains a fluorinated polymer (I).

The ion exchange capacity X of the fluorinated polymer (I) is preferably from 1.0 to 2.3 meq/g dry resin, particularly preferably from 1.0 to 2.0 meq/g dry resin, from the viewpoint of satisfying both excellent membrane strength and reduction in electrolysis voltage at a higher level.

The fluorinated polymer (I) to be used in the polymer electrolyte membrane may be of 1 type, or 2 or more types may be used as laminated or mixed.

The polymer electrolyte membrane may contain a polymer other than the fluorinated polymer (I), but the polymer in the polymer electrolyte membrane is preferably substantially made of the fluorinated polymer (I). Substantially made of the fluorinated polymer (I) is intended that the content of the fluorinated polymer (I) is at least 95 mass% based on the total mass of the polymer in the polymer electrolyte membrane. The upper limit of the content of the fluorinated polymer (I) may be 100 mass% based on the total mass of the polymer in the polymer electrolyte membrane.

A specific example of another polymer other than the fluorinated polymer (I) may be at least one type of polyazole compound selected from the group consisting of a polymer of a heterocyclic compound containing 1 or more nitrogen atoms in a ring, and a polymer of a heterocyclic compound containing 1 or more nitrogen atoms and an oxygen atom and/or a sulfur atom in a ring.

As specific examples of the polyazole compound, a polyimidazole compound, a polybenzimidazole compound, a polybenzobisimidazole compound, a polybenzoxazole compound, a polyoxazole compound, a polythiazole compound, and a polybenzothiazole compound, may be mentioned.

Further, from the viewpoint of oxidation resistance of the polymer electrolyte membrane, another polymer may be a polyphenylene sulfide resin or a polyphenylene ether resin.

The fluorinated polymer (I) has ion exchange groups. As specific examples of the ion exchange groups, sulfonic acid type functional groups and carboxylic acid type functional groups may be mentioned, and sulfonic acid type functional groups are preferred from such a viewpoint that the electrolysis voltage can be further reduced.

Hereinafter, the mode of a fluorinated polymer having sulfonic acid type functional groups (hereinafter referred to as a "fluorinated polymer (S)") will be mainly described in detail.

The fluorinated polymer (S) preferably contains units based on a fluorinated olefin and units having a sulfonic acid type functional group and a fluorine atom.

The fluorinated olefin may, for example, be a $C_{2-3}$ fluoroolefin having 1 or more fluorine atoms in the molecule.

Specific examples of the fluoroolefin may be tetrafluoroethylene (hereinafter referred to also as "TFE"), chlorotrifluoroethylene, vinylidene fluoride, vinyl fluoride, and hexafluoropropylene. Among them, TFE is preferred from the viewpoint of excellent production cost of the monomer, reactivity with other monomers, and characteristics of the obtainable fluorinated polymer (S).

As the fluorinated olefin, one type may be used alone, and two or more types may be used in combination.

As the units having a sulfonic acid type functional group and a fluorine atom, units represented by the formula (1) is preferred.

Formula (1) $-[CF_2-CF(-L-(SO_3M)_n)]-$

L is an n+1 valent perfluorohydrocarbon group which may contain an etheric oxygen atom.

The etheric oxygen atom may be located at the terminal in the perfluoro hydrocarbon group or may be located between carbon atom-carbon atom.

The number of carbon atoms in the n+1 valent perfluorohydrocarbon group is preferably at least 1, particularly preferably at least 2, and is preferably at most 20, particularly preferably at most 10.

L is preferably an n+1 valent perfluoro-aliphatic hydrocarbon group which may contain an etheric oxygen atom, and particularly preferred is a binary perfluoroalkylene group which may contain an etheric oxygen atom, as an embodiment of n=1, or a ternary perfluoro-aliphatic hydrocarbon group which may contain an etheric oxygen atom, as an embodiment of n=2.

The above binary perfluoroalkylene group may be linear or branched.

M is a hydrogen atom, an alkali metal or a quaternary ammonium cation. n is 1 or 2.

As the units represented by the formula (1), units represented by the formula (1-1), units represented by the formula (1-2), units represented by the formula (1-3) or units represented by the formula (1-4) are preferred.

Formula (1-1) $-[CF_2-CF(-O-R^{f1}-SO_3M)]-$

Formula (1-2) $-[CF_2-CF(-R^{f1}-SO_3M)]-$

Formula (1-3)

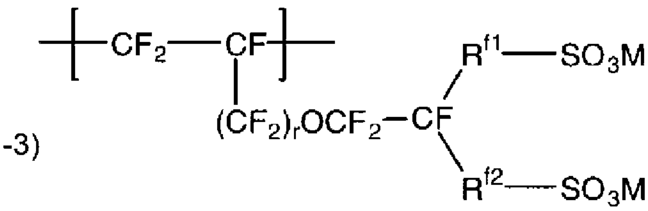

Formula (1-4)

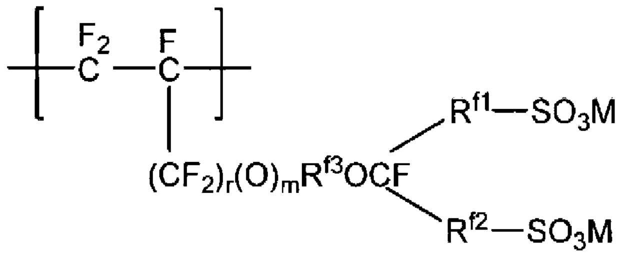

$R^{f1}$ is a perfluoroalkylene group which may contain an oxygen atom between carbon atom-carbon atom. The number of carbon atoms in the above perfluoroalkylene group is preferably at least 1, particularly preferably at least 2, and is preferably at most 20, particularly preferably at most 10.

$R^{f2}$ is a single bond or a perfluoroalkylene group which may contain an oxygen atom between carbon atom-carbon atom. The number of carbon atoms in the above perfluoroalkylene group is preferably at least 1, particularly preferably at least 2, and is preferably at most 20, particularly preferably at most 10.

$R^{f3}$ is a single bond or a perfluoroalkylene group which may contain an oxygen atom between carbon atom-carbon atom. The number of carbon atoms in the above perfluoroalkylene group is preferably at least 1, particularly preferably at least 2, and is preferably at most 20, particularly preferably at most 10.

r is 0 or 1 .

m is 0 or 1.

M is a hydrogen atom, an alkali metal or a quaternary ammonium cation.

As the units represented by the formula (1-1) and the units represented by the formula (1-2), the units represented by the formula (1-5) are more preferred.

Formula (1-5) $-[CF_2-CF(-(CF_2)_x-(OCF_2CFY)_y-O-(CF_2)_z-SO_3M)]-$

where x is 0 or 1, y is an integer of from 0 to 2, z is an integer of from 1 to 4, and Y is F or $CF_3$. M is as described above.

Specific examples of the units represented by the formula (1-1) may be the following units. In the formulas, w is an integer of from 1 to 8, and x is an integer of from 1 to 5. The definition of M in the formula is as described above.

$-[CF_2-CF(-O-(CF_2)_w-SO_3M)]-$

$-[CF_2-CF(-O-CF_2CF(CF_3)-O-(CF_2)_w-SO_3M)]-$

$-[CF_2-CF(-(O-CF_2CF(CF_3))_x-SO_3M)]-$

Specific examples of the units represented by the formula (1-2) may be the following units. In the formulas, w is an integer of from 1 to 8. The definition of M in the formula is as described above.

$-[CF_2-CF(-(CF_2)_w-SO_3M)]-$

$-[CF_2-CF(-CF_2-O-(CF_2)_w-SO_3M)]-$

As the units represented by the formula (1-3), units represented by the formula (1-3-1) are preferred. The definition of M in the formula is as described above.

Formula (1-3-1) 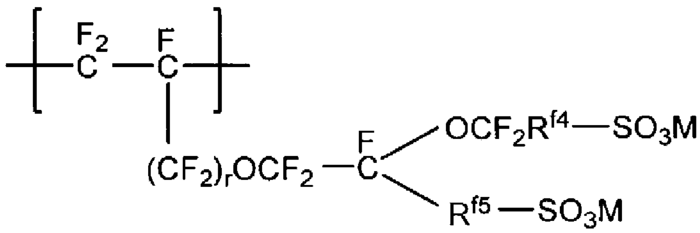

$R^{f4}$ is a $C_{1-6}$ linear perfluoroalkylene group, and $R^{f5}$ is a single bond or a $C_{1-6}$ linear perfluoroalkylene group which may contain an oxygen atom between carbon atom-carbon atom. The definitions of r and M are as described above.

Specific examples of the units represented by the formula (1-3-1) may be the following.

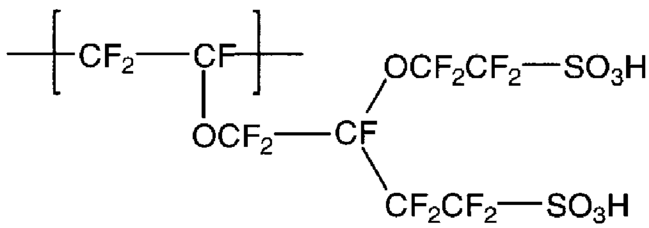

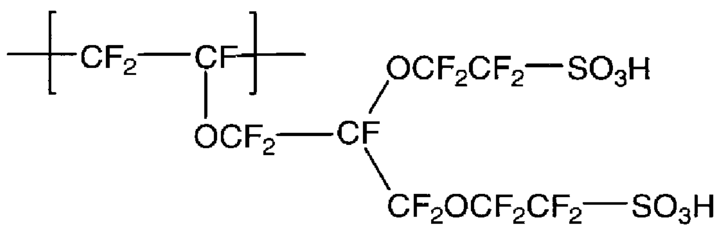

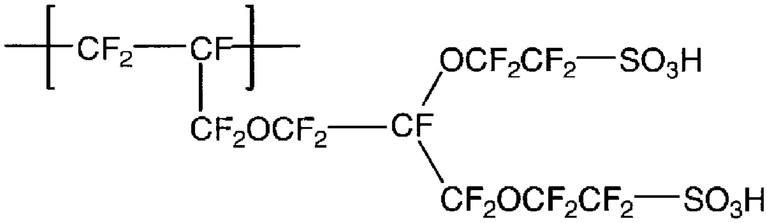

As the units represented by the formula (1-4), units represented by the formula (1-4-1) are preferred. The definitions of $R^{f1}$, $R^{f2}$ and M in the formula are as described above.

Formula (1-4-1)

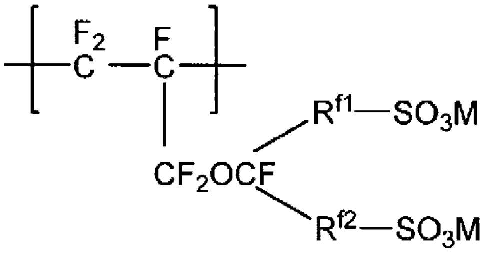

A specific example of the units represented by the formula (1-4-1) may be the following.

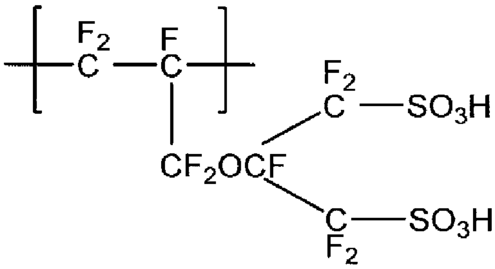

As the units having a sulfonic acid type functional group and a fluorine atom, one type may be used alone, or two or more types may be used in combination.

The fluorinated polymer (I) may contain units based on a fluorinated olefin as well as units based on another monomer other than the units having a sulfonic acid type functional group and a fluorine atom.

Examples of another monomer may be $CF_2=CFR^{f6}$ (where $R^{f6}$ is a $C_{2-10}$ perfluoroalkyl group), $CF_2=CF-OR^{f7}$ (where $R^{f7}$ is a $C_{1-10}$ perfluoroalkyl group), and $CF_2=CFO(CF_2)_yCF=CF_2$ (where v is an integer of from 1 to 3).

The content of units based on another monomer is preferably at most 30 mass% to all units in the fluorinated polymer (I), from the viewpoint of maintaining the ion-exchange performance.

The polymer electrolyte membrane may have a single layer structure or a multilayer structure. In the case of a multilayer structure, for example, an embodiment may be mentioned in which a plurality of layers containing a fluorinated polymer (I) and having different ion exchange capacities, are laminated.

(Method for producing polymer electrolyte membrane)

The polymer electrolyte membrane is preferably produced by producing a membrane (hereinafter referred to also as a "precursor membrane") containing a polymer (hereinafter referred to also as a "fluorinated polymer (I')") of a fluorinated monomer (hereinafter referred to also as a fluorinated monomer (I')) having a group which can be converted to an ion exchange group, and a woven fabric, and then converting groups which can be converted to ion exchange groups, in the precursor membrane, to ion exchange groups.

The form of the woven fabric is as described above.

As the fluorinated polymer (I'), preferred is a polymer (hereinafter referred to also as a "fluorinated polymer (S')") of a fluorinated monomer (hereinafter referred to also as a "fluorinated monomer (S')") having a group which can be converted to a sulfonic acid type functional group, and particularly preferred is a copolymer of a fluorinated olefin and a monomer having a group which can be converted to a sulfonic acid type functional group and a fluorine atom.

Hereinafter, the fluorinated polymer (S') will be described in detail.

As a method for copolymerizing the fluorinated polymer (S'), a known method such as solution polymerization,

suspension polymerization, or emulsion polymerization may be employed.

As the fluorinated olefin, one exemplified above may be mentioned, and TFE is preferred from the viewpoint of the production cost of the monomer, the reactivity with other monomers, and excellent characteristics of the obtainable fluorinated polymer (S).

As the fluorinated olefin, one type may be used alone, or two or more types may be used in combination.

The fluorinated monomer (S') may be a compound having at least one fluorine atom in its molecule, having an ethylenic double bond, and having a group capable of being converted to a sulfonic acid type functional group.

As the fluorinated monomer (S'), a compound represented by the formula (2) is preferred from the viewpoint of the production cost of the monomer, the reactivity with other monomers, and excellent characteristics of the obtainable fluorinated polymer (S).

Formula (2) $CF_2=CF-L-(A)_n$

The definitions of L and n in the formula (2) are as described above.

A is a group capable of being converted to a sulfonic acid type functional group. The group capable of being converted to a sulfonic acid type functional group is preferably a functional group which can be converted to a sulfonic acid type functional group by hydrolysis. Specific examples of the group capable of being converted to a sulfonic acid type functional group may be $-SO_2F$, $-SO_2Cl$, and $-SO_2Br$.

As the compound represented by the formula (2), a compound represented by the formula (2-1), a compound represented by the formula (2-2), a compound represented by the formula (2-3), and a compound represented by the formula (2-4) are preferred.

Formula (2-1) $CF_2=CF-O-R^{f1}-A$

Formula (2-2) $CF_2=CF-R^{f1}-A$

Formula (2-3) 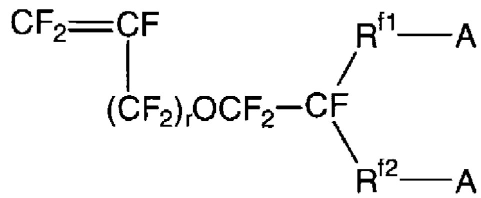

The definitions of $R^{f1}$, $R^{f2}$, r and A in the formulas are as described above.

Formula (2-4) 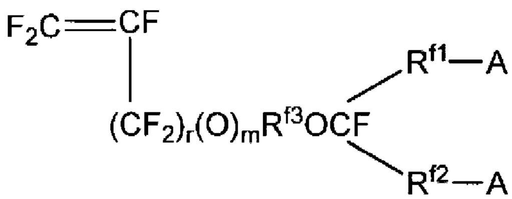

The definitions of $R^{f1}$, $R^{f2}$, $R^{f3}$, r, m and A in the formula are as described above.

As the compound represented by the formula (2-1) and the compound represented by the formula (2-1), a compound represented by the formula (2-5) is preferred.

Formula (2-5) $CF_2=CF-(CF_2)_x-(OCF_2CFY)_y-O-(CF_2)_z-SO_3M$

The definitions of M, x, y, z and Y in the formula are as described above.

Specific examples of the compound represented by the formula (2-1) may be the following compounds. In the formulas, w is an integer of from 1 to 8, and x is an integer of from 1 to 5.

$CF_2=CF-O-(CF_2)_w-SO_2F$

$CF_2=CF-O-CF_2CF(CF_3)-O-(CF_2)_w-SO_2F$

$CF_2=CF-[O-CF_2CF(CF_3)]_x-SO_2F$

Specific examples of the compound represented by the formula (2-2) may be the following compounds. In the formulas, w is an integer of from 1 to 8.

$CF_2=CF-(CF_2)_w-SO_2F$

$CF_2=CF-CF_2-O-(CF_2)_w-SO_2F$

As the compound represented by the formula (2-3), a compound represented by the formula (2-3-1) is preferred.

Formula (2-3-1)

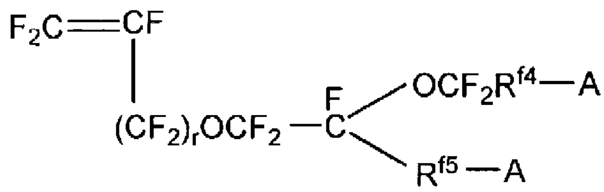

The definitions of $R^{f4}$, $R^{f5}$, r and A in the formula are as described above.
Specific examples of the compound represented by the formula (2-3-1) may be the following.

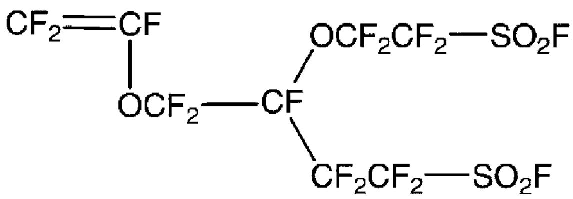

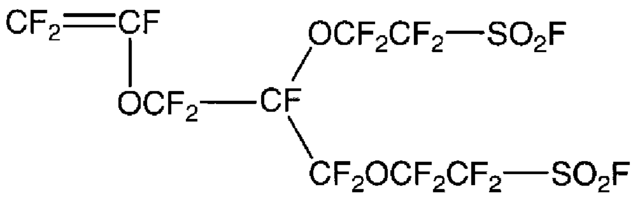

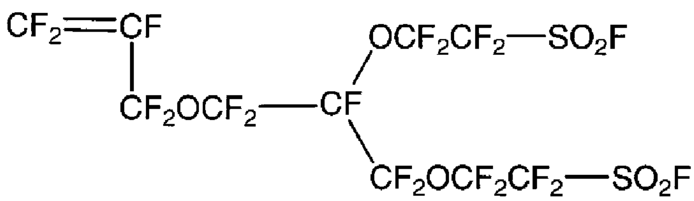

As the compound represented by the formula (2-4), a compound represented by the formula (2-4-1) is preferred.

Formula (2-4-1)

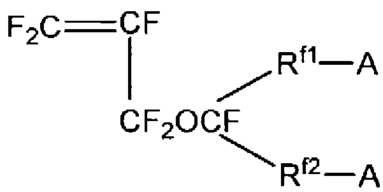

The definitions of $R^{f1}$, $R^{f2}$ and A in the formula are as described above.
A specific example of the compound represented by the formula (2-4-1) may be the following.

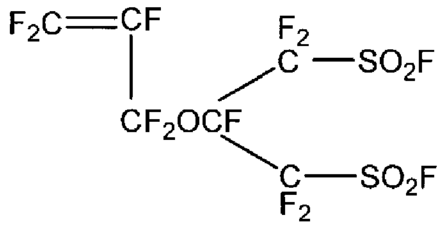

As the fluorinated monomer (S'), one type may be used alone, or two or more types may be used in combination.

In addition to the fluorinated olefin and the fluorinated monomer (S'), still other monomers may be used for producing the fluorinated polymer (S'). As other monomers, those exemplified above may be mentioned.

The ion exchange capacity of the fluorinated polymer (I') can be adjusted by changing the content of groups capable of being converted to ion exchange groups in the fluorinated polymer (I').

As a specific example of the method for producing the precursor membrane, an extrusion method may be mentioned. More specifically, a method may be mentioned in which a membrane (I') made of a fluorinated polymer (I') is formed, and thereafter, a membrane (I'), a woven fabric, and a membrane (I') are disposed in this order, and they are laminated by using a lamination roll or a vacuum lamination device.

A specific example of the method for converting groups capable of being converted to ion exchange groups in a precursor membrane to ion exchange groups may be a method of subjecting a precursor membrane to treatment such as hydrolysis treatment or conversion treatment to acid type.

Among them, a method of bringing the precursor membrane into contact with an alkaline aqueous solution is preferred.

Specific examples of the method of bringing the precursor membrane into contact with an alkaline aqueous solution may be a method of immersing the precursor membrane in an alkaline aqueous solution, and a method of spray coating an alkaline aqueous solution on the surface of the precursor membrane.

The temperature of the alkaline aqueous solution is preferably from 30 to 100°C, particularly preferably from 40 to 100°C. The contact time between the precursor membrane and the alkaline aqueous solution is preferably from 3 to 150 minutes, particularly preferably from 5 to 50 minutes.

The alkaline aqueous solution preferably comprises an alkali metal hydroxide, a water-soluble organic solvent and water.

As the alkali metal hydroxide, sodium hydroxide and potassium hydroxide may be mentioned.

In this specification, a water-soluble organic solvent is an organic solvent which is easily soluble in water, and specifically, an organic solvent having a solubility of preferably at least 0.1 g, particularly preferably at least 0.5 g, in 1,000 ml of water (20°C). The water-soluble organic solvent is preferably one which contains at least one member selected from the group consisting of aprotic organic solvents, alcohols and amino alcohols, and particularly preferably one which contains an aprotic organic solvent.

As the water-soluble organic solvent, one type may be used alone, or two or more types may be used in combination.

Specific examples of the aprotic organic solvent may be dimethyl sulfoxide, N,N-dimethylformamide, N,N-dimethylacetamide, N-methyl-2-pyrrolidone and N-ethyl-2-pyrrolidone, and dimethyl sulfoxide is preferred.

Specific examples of the alcohol may be methanol, ethanol, isopropanol, butanol, methoxyethoxyethanol, butoxyethanol, butylcarbitol, hexyloxyethanol, octanol, 1-methoxy-2-propanol and ethylene glycol.

Specific examples of the amino alcohol may be ethanolamine, N-methylethanolamine, N-ethylethanolamine, 1-amino-2-propanol, 1-amino-3-propanol, 2-aminoethoxyethanol, 2-aminothioethoxyethanol and 2-amino-2-methyl-1-propanol.

The concentration of the alkali metal hydroxide is preferably from 1 to 60 mass%, particularly preferably from 3 to 55 mass%, in the alkaline aqueous solution.

The content of the water-soluble organic solvent is preferably from 1 to 60 mass%, particularly preferably from 3 to 55 mass%, in the alkaline aqueous solution.

The concentration of water is preferably from 39 to 80 mass% in the alkaline aqueous solution.

After contact of the precursor membrane with the alkaline aqueous solution, treatment for removing the alkaline aqueous solution may be performed. The method of removing the alkaline aqueous solution may, for example, be a method of washing the precursor membrane contacted with the alkaline aqueous solution, with water.

After contact of the precursor membrane with the alkaline aqueous solution, the obtained membranes may be brought into contact with the acidic aqueous solution to convert the ion exchange groups to an acid type.

Specific examples of the method of bringing the precursor membrane into contact with the acidic aqueous solution may be a method of immersing the precursor membrane in an acidic aqueous solution, and a method of spray coating an acidic aqueous solution on the surface of the precursor membrane.

The acidic aqueous solution preferably contains an acid component and water.

Specific examples of the acid component may be hydrochloric acid and sulfuric acid.

<Anode and cathode>

The anode and cathode each have a catalyst layer. In the example in Fig. 1, the anode 22 and the cathode 24 each have a catalyst layer 26 and a gas diffusion layer 28.

A specific example of the catalyst layer may be a layer containing a catalyst and a polymer having ion exchange groups.

Specific examples of the catalyst may be a supported catalyst in which a catalyst containing platinum, a platinum alloy or platinum having a core-shell structure is supported on a carbon carrier, an iridium oxide catalyst, an alloy containing iridium oxide, and a catalyst containing iridium oxide having a core-shell structure. The carbon carrier may be carbon black powder.

The polymer having ion exchange groups may be a fluorinated polymer having ion exchange groups.

The gas diffusion layer has a function to uniformly diffuse gas into the catalyst layer and a function as a current collector. Specific examples of the gas diffusion layer may be carbon paper, carbon cloth, and carbon felt.

The gas diffusion layer is preferably subjected to water repellent treatment by PTFE or the like.

The membrane electrode assembly in Fig. 1 contains gas diffusion layers 28, but a gas diffusion layer is an optional member and may not be contained in the membrane electrode assembly.

<Method for producing membrane electrode assembly>

The method for producing a membrane electrode assembly may, for example, be a method in which a catalyst layer is formed on a polymer electrolyte membrane, and the obtained assembly is further sandwiched by gas diffusion layers, or a method in which a catalyst layer is formed on a gas diffusion layer to form electrodes (anode, cathode), and a polymer electrolyte membrane is sandwiched by such electrodes.

Here, the method for producing a catalyst layer may be a method in which a coating liquid for forming a catalyst layer is applied at a predetermined position and dried as the case requires. The coating liquid for forming a catalyst layer is a liquid in which a polymer having ion exchange groups and a catalyst are dispersed in a dispersion medium.

<Applications>

The membrane electrode assembly of the present invention is used in a water electrolysis apparatus (specifically, a polymer electrolyte water electrolysis apparatus). The membrane electrode assembly in the water electrolysis apparatus is disposed at a position to partition the anode chamber and the cathode chamber, and therefore, there may be a case where a large pressure is applied to the membrane electrode assembly during operation of the water electrolysis apparatus. Even in such a case, since the membrane electrode assembly of the present invention is excellent in membrane strength, it is possible to prevent breakage of the membrane electrode assembly when applied to a water electrolysis apparatus.

[Water electrolysis apparatus]

The water electrolysis apparatus of the present invention contains the above-described membrane electrode assembly. Since the membrane electrode assembly of the present invention is excellent in strength, the water electrolysis apparatus of the present invention is excellent in durability. Further, in the water electrolysis apparatus of the present invention, the electrolysis voltage can be lowered.

EXAMPLES

Hereinafter, the present invention will be described in detail with reference to Examples. However, the present invention is not limited to these Examples.

[Membrane thickness]

The membrane thickness Y of a polymer electrolyte membrane was calculated in accordance with the method as described in the section for the above description of the polymer electrolyte membrane.

[Ion exchange capacity of fluorinated polymer]

A fluorinated polymer was left in a glove box having dry nitrogen permitted to flow, for 24 hours, and the dried mass of the fluorinated polymer was measured. Thereafter, the fluorinated polymer was immersed in a 2 mol/L aqueous sodium chloride solution at 60°C for 1 hour. After washing the fluorinated polymer with ultrapure water, the fluorinated polymer was taken out, and the liquid in which the fluorinated polymer was immersed was titrated with a 0.1 mol/L aqueous sodium hydroxide solution, whereupon the ion exchange capacity X (meq/g dry resin) of the fluorinated polymer was obtained.

[Weight of woven fabric]

Using a sample obtained by cutting the raw material of woven fabric used into a **20×20** cm size, and the mass was measured. The above measurement was carried out five times, and based on the average value thereof, the weight (g/$m^2$) of the woven fabric was obtained.

[Density of warp yarns and weft yarns constituting the woven fabric]

The density of warp yarns and weft yarns constituting the woven fabric was calculated according to the following method. With respect to each of the warp yarns and the weft yarns, it was calculated by converting an average value obtained by measuring the lengths of 10 yarns five times from the observation image by the optical microscope to a density (lines/cm [lines/inch]).

[Aperture ratio of woven fabric]

Using a sample obtained by cutting the raw material of woven fabric used into a 20×20 cm size, it was calculated according to the method as described in the section for the above description of the woven fabric.

[Denier number of warp yarns and denier number of weft yarns constituting the woven fabric]

The denier number of warp yarns and the denier number of weft yarns, constituting the woven fabric, were calculated according to the following method. Five aperture regions were randomly selected, and the aperture ratio was calculated from the observation image of the optical microscope, and the average value thereof was used as the aperture ratio.

[Burst test]

Using a membrane electrode assembly obtained by the procedures as described later, a burst test was carried out five times by a Mullen Burst Tester M2-LD (manufactured by Toyo Seiki Seisaku-sho, Ltd.), and on the basis of the mean value of the five measurements (burst strength), the evaluation was made in accordance with the following standards.

◎: At least 400 kPa
○: Greater than 210 kPa and less than 400 kPa
×: At most 210 kPa

[Electrolysis voltage evaluation test]

A dispersion (hereinafter referred to also as "dispersion X") was obtained in which a polymer (ion exchange capacity: 1.10 meq/g dry resin) in which TFE and a monomer (X) to be described later were copolymerized and subjected to hydrolysis and acid treatment into an acid type, was dispersed in a solvent of water/ethanol = 40/60 (mass%), at a solid content concentration of 25.8%. To the obtained dispersion X (19.0 g), ethanol (0.52 g) and water (3.34 g) were added, and further, an iridium oxide catalyst containing 76 mass% of iridium in the dispersion ("ELC-1910", manufactured by Tanaka Kikinzoku Kogyo, K. K.) (13.0 g) was added. After treating the obtained mixture with a planetary bead mill (rotational speed: 300 rpm) for 30 minutes, water (4.49 g) and ethanol (4.53 g) were added, and further, the mixture was treated with a planetary bead mill (rotational speed: 200 rpm) for 60 minutes to obtain an anode catalyst ink having a solid content concentration of 40 mass%.

On one surface of the polymer electrolyte membrane obtained by the procedure as described later, the anode catalyst ink was applied by a bar coater so that iridium became 2.0 mg/$cm^2$, dried at 80°C for 10 minutes, and further subjected to a heat treatment at 150°C for 15 minutes to obtain an electrolyte membrane with an anode catalyst layer.

Water (59.4 g) and ethanol (39.6 g) were added to a supported catalyst (manufactured by Tanaka Kikinzoku Kogyo, K. K., "TEC10E50E") (11 g) having platinum supported in an amount of 46 mass% on carbon powder, and the mixture was mixed and pulverized by using an ultrasonic homogenizer to obtain a dispersion of a catalyst.

To the dispersion of the catalyst, a dispersion X (20.1 g) and a mixed liquid (29.2 g) obtained by previously mixing and kneading ethanol (11 g) and ZEORORA-H (manufactured by Zeon Corporation) (6.3 g) were added. Further, water (3.66 g) and ethanol (7.63 g) were added to the obtained dispersion and mixed for 60 minutes by using a paint conditioner to bring the solid content concentration to be 10.0 mass%, thereby to obtain a cathode catalyst ink.

A cathode catalyst ink was applied on a ETFE sheet by a die coater, dried at 80°C, and further subjected to heat treatment at 150°C for 15 minutes to obtain a cathode catalyst layer decal having a platinum content of 0.4 mg/cm$^2$.

The surface of the electrolyte membrane with the anode catalyst layer on which the anode catalyst layer was not formed and the surface of the cathode catalyst layer decal on which the catalyst layer existed were opposed to each other, and heat-pressed under conditions of a press temperature of 150°C for a press time of 2 minutes under a pressure of 3 MPa, to bond the electrolyte membrane with the anode catalyst layer and the cathode catalyst layer, whereupon the temperature was lowered to 70°C, the pressure was released, followed by taking out, and the ETFE sheet of the cathode catalyst layer decal was peeled to obtain a membrane electrode assembly with an electrode area of 25 cm$^2$.

The membrane electrode assembly obtained by the above procedure was heat-treated at 150°C for 15 minutes, and then set in a water electrolysis evaluating jig EH50-25 (manufactured by Greenlight Innovation).

Next, first, in order to sufficiently moisture the polymer electrolyte membrane and both electrode ionomers, pure water having a conductivity of at most 1.0 μS/cm, a temperature of 80°C, and an atmospheric pressure, was supplied to the anode side and the cathode side, at a flow rate of 50 mL/min for 12 hours. Subsequently, the cathode side was nitrogen purged.

After nitrogen-purging, to the anode side, pure water with a conductivity of at most 1.0 μS/cm, a temperature of 80°C and an atmospheric pressure, was supplied at a flow rate of 50 mL/min, and the generated gas pressure at the cathode side was kept at an atmospheric pressure, while the current was stepwise increased by 2.5A in a range of from 0 to 50A (current density of from 0 to 2A/cm$^2$) by a DC power supply PWR1600L manufactured by KIKUSUI ELECTRONICS CORP. At each step, the current was held for 10 minutes, and the electrolysis voltage at the time of the current 50A (current density 2A/cm$^2$) was evaluated by the following standards.

◎: At most 1.85 V
○: Greater than 1.85 V and at most 1.95 V
×: Greater than 1.95 V

[Production of fluorinated polymer (S'-1)]

$CF_2=CF_2$ and monomers (X) represented by the following formula (X) were copolymerized to obtain a fluorinated polymer (S'-1) (ion exchange capacity: 1.25 meq/g dry resin).

$$CF_2=CF-O-CF_2CF(CF_3)-O-CF_2CF_2-SO_2F \qquad (X)$$

[Production of fluorinated polymer (S'-2)]

$CF_2=CF_2$ and monomer (Y) represented by the following formula (Y) were copolymerized to obtain a fluorinated polymer (S'-2) (ion exchange capacity: 1.90 meq/g dry resin).

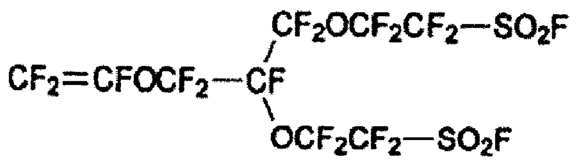
· · · (Y)

[Production of fluorinated polymer (S'-3)]

$CF_2=CF_2$ and monomer (X) were copolymerized to obtain a fluorinated polymer (S'-3) (ion exchange capacity: 1.00 meq/g dry resin).

[Production of fluorinated polymer (S'-4)]

$CF_2=CF_2$ and monomers (Z) represented by the following formula (Z) were copolymerized to obtain a fluorinated polymer (S'-4) (ion exchange capacity: 1.78 meq/g dry resin).

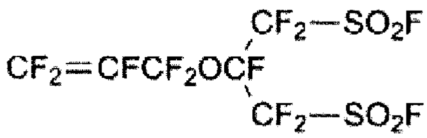

• • • (Z)

Here, the ion exchange capacity described in the above [Production of fluorinated polymer (S'-1)] to [Production of fluorinated polymer (S'-4)] represents an ion exchange capacity of a fluorinated polymer obtainable when the fluorinated polymer (S'-1) to (S'-4) is hydrolyzed by the procedure as described later.

[Production of film α1]

The fluorinated polymer (S'-1) was molded by a melt extrusion method to obtain a film α1 (membrane thickness: 45 μm) composed of the fluorinated polymer (S'-1).

[Production of film α2]

The fluorinated polymer (S'-1) was molded by a melt extrusion method to obtain a film α2 (membrane thickness: 30 μm) composed of the fluorinated polymer (S'-1).

[Production of film α3]

The fluorinated polymer (S'-1) was molded by a melt extrusion method to obtain a film α3 (membrane thickness: 60 μm) composed of the fluorinated polymer (S'-1).

[Production of film α4]

The fluorinated polymer (S'-1) was molded by a melt extrusion method to obtain a film α4 (membrane thickness: 70 μm) composed of the fluorinated polymer (S'-1).

[Production of film β1]

The fluorinated polymer (S'-2) was molded by a melt extrusion method to obtain a film β1 (membrane thickness: 70 μm) composed of the fluorinated polymer (S'-2).

[Production of film γ1]

The fluorinated polymer (S'-3) was molded by a melt extrusion method to obtain a film γ1 (membrane thickness: 30 μm) composed of the fluorinated polymer (S'-3).

[Production of film σ1]

The fluorinated polymer (S'-4) was molded by a melt extrusion method to obtain a film σ1 (membrane thickness: 70 μm) composed of the fluorinated polymer (S'-4).

[Production of woven fabric]

Using 11.7 denier yarns made of PPS as warp yarns and weft yarns, plain weaving was carried out so that the density of the PPS yarns became 39.4 yarns/cm (100 yarns/inch) to obtain a woven fabric A1. The weight of the woven fabric A1 was 10.2 $g/m^2$. Here, the warp yarns and the weft yarns were composed of slit yarns.

Further, woven fabrics A2 to A4, B1 to B2, C1 to C2 and D1 were produced in the same manner as in the production of the woven fabric A1, except that the types and deniers of the materials constituting the warp yarns and the weft yarns, and the density and the basis weight of the woven fabric, were changed to the values described in Table 1.

[Reference Example 1]

PET film/film α1/woven fabric A1/film α1/PET film were superimposed in this order. The superposed members were heat-pressed for 10 minutes by a flat plate press at a temperature of 200°C and a surface pressure of 30 $MPa/m^2$, and then, the transfer base materials on both sides were peeled off at a temperature of 50°C to obtain a precursor membrane.

In a solution of dimethyl sulfoxide/potassium hydroxide/water = 30/5.5/64.5 (mass ratio), the precursor membrane was immersed at 95°C for 30 minutes, and groups capable of being converted to sulfonic acid type functional groups in the precursor membrane were hydrolyzed to convert them to sulfonic acid type functional groups of K type, and then washed with water. Thereafter, the obtained membrane was immersed in 1M sulfuric acid, whereby the terminal groups were converted from K type to H type, and then dried to obtain a polymer electrolyte membrane.

Using the obtained polymer electrolyte membrane, the measurement of the membrane thickness Y of the polymer electrolyte membrane, the burst test and the water electrolysis performance evaluation test were conducted. The results are shown in Table 1.

[Examples 2 to 7 and 11, Reference Examples 8 to 10, Comparative Examples 1 to 8]

A polymer electrolyte membrane was prepared by the same method as in Reference Example 1, except that the type of the film and the woven fabric were changed as described in Table 1, and the measurement of the membrane thickness Y of the polymer electrolyte membrane and various tests were conducted. However, in Comparative Examples 1 and 2, a woven fabric was not used. The results are shown in Table 1.

The "denier number (g/9,000 m)" in Table 1 represents the denier number of warp yarns and weft yarns constituting the woven fabric. In each of Examples 2 to 7 and 11, Reference Examples 1 and 8 to 10 and Comparative Examples 1 to 8, the denier number of warp yarns and weft yarns constituting the woven fabric was the same.

[Table 1]

| | Type of film | Monomer species | Ion exchange capacity X of fluorinated polymer (meq/g dry resin) | Membrane thickness Y of polymer electrolyte membrane (μm) |
|---|---|---|---|---|
| Reference Example 1 | α1 | TFE/Monomer (X) | 1.25 | 90 |
| Example 2 | α1 | TFE/Monomer (X) | 1.25 | 90 |
| Example 3 | α1 | TFE/Monomer (X) | 1.25 | 90 |
| Example 4 | α1 | TFE/Monomer (X) | 1.25 | 90 |
| Example 5 | α1 | TFE/Monomer (X) | 1.25 | 90 |
| Example 6 | β1 | TFE/Monomer (Y) | 1.90 | 140 |
| Example 7 | σ1 | TFE/Monomer (Z) | 1.78 | 140 |
| Reference Example 8 | α2 | TFE/Monomer (X) | 1.25 | 60 |
| Reference Example 9 | γ1 | TFE/Monomer (X) | 1.00 | 60 |
| Reference Example 10 | α1 | TFE/Monomer (X) | 1.25 | 90 |
| Example 11 | α3 | TFE/Monomer (X) | 1.25 | 120 |
| Comparative Example 1 | α1 | TFE/Monomer (X) | 1.25 | 90 |
| Comparative Example 2 | γ1 | TFE/Monomer (X) | 1.00 | 60 |
| Comparative Example 3 | α1 | TFE/Monomer (X) | 1.25 | 90 |
| Comparative Example 4 | α1 | TFE/Monomer (X) | 1.25 | 90 |
| Comparative Example 5 | α1 | TFE/Monomer (X) | 1.25 | 90 |
| Comparative Example 6 | α4 | TFE/Monomer (X) | 1.25 | 140 |
| Comparative Example 7 | γ2 | TFE/Monomer (X) | 1.00 | 100 |
| Comparative Example 8 | α1 | TFE/Monomer (X) | 1.25 | 90 |

[Table 1] (continued)

| | Woven fabric | | | | | | Burst test | Electrolysis voltage evaluation test |
|---|---|---|---|---|---|---|---|---|
| | Type | Basis weight (g/cm2) | Denier number (g/9000m) | Density (yarns/cm) [yarns/inch] | Material | Aperture ratio (%) | | |
| Reference Example 1 | A1 | 10.2 | 11.7 | 39.4 [100] | PPS | 74.3 | ○ | ○ |
| Example 2 | A2 | 25.3 | 19.3 | 59.1 [150] | PPS | 53.9 | ○ | ○ |
| Example 3 | B1 | 24.4 | 18.6 | 59.1 [150] | PFA | 62.9 | ○ | ○ |
| Example 4 | B2 | 16.3 | 18.6 | 39.4 [100] | PFA | 74.3 | ○ | ○ |
| Example 5 | C1 | 39.2 | 49.8 | 35 [90] | PTFE | 63.7 | ○ | ○ |
| Example 6 | B2 | 16.3 | 18.6 | 39.4 [100] | PFA | 62.9 | ○ | ◎ |
| Example 7 | B2 | 16.3 | 18.6 | 39.4 [100] | PFA | 74.3 | ○ | ◎ |
| Reference Example 8 | B1 | 24.4 | 18.6 | 59.1 [150] | PFA | 62.9 | ○ | ◎ |
| Reference Example 9 | B2 | 16.3 | 18.6 | 39.4 [100] | PFA | 74.3 | ○ | ◎ |
| Reference Example 10 | D1 | 10.0 | 11.4 | 39.4 [100] | PEEK | 74.3 | ○ | ○ |
| Example 11 | B2 | 16.3 | 18.6 | 39.4 [100] | PFA | 74.3 | ○ | ○ |
| Comparative Example 1 | - | - | - | - | - | 100.0 | × | ◎ |
| Comparative Example 2 | - | - | - | - | - | 100.0 | × | ○ |
| Comparative Example 3 | A3 | 52.9 | 40.3 | 59.1 [150] | PPS | 38.0 | ○ | × |
| Comparative Example 4 | B3 | 71.8 | 54.7 | 59.1 [150] | PFA | 41.7 | ○ | × |
| Comparative Example 5 | C2 | 72 | 55.2 | 59.1 [150] | PTFE | 41.7 | ◎ | × |
| Comparative Example 6 | B2 | 16.3 | 18.6 | 39.4 [100] | PFA | 74.3 | ○ | × |
| Comparative Example 7 | B2 | 16.3 | 18.6 | 39.4 [100] | PFA | 74.3 | ○ | × |
| Comparative Example 8 | A4 | 1.6 | 1.2 | 59.1 [150] | PPS | 87.2 | × | ◎ |

Fig. 5 is a graph in which by taking the ion exchange capacity X of the fluorinated polymer contained in the polymer electrolyte membrane on the horizontal axis, and the film thickness Y of the polymer electrolyte membrane on the vertical axis, they are plotted for each membrane electrode assembly in Examples and Comparative Examples. Here, the dotted line in the graph is a straight line represented by the formula $Y=240X-170$.

As shown in Fig. 5, each of the membrane electrode assemblies of Examples 2 to 7 and 11 and Reference Examples 1 and 7 to 10 satisfies the relational formula Y1 (i.e. $Y \leqq 240X-170$).

As shown in Table 1, it was confirmed that, when a woven fabric having an aperture ratio of at least 50% and a denier number of warp yarns and a denier number of weft yarns being each independently at least 2, and a membrane electrode assembly containing a polymer electrolyte membrane satisfying the relational formula Y1, were used, the strength was excellent, and the electrolysis voltage could be reduced when applied to a water electrolysis apparatus (Examples 2 to 7 and 11 and Reference Examples 1 and 7 to 10).

Whereas, although the membrane electrode assemblies in Comparative Examples 1 and 2 satisfy the formula of

Y≦240X-170, since a polymer electrolyte membrane containing no woven fabric was used, the strength of the membrane electrode assemblies was inferior.

Further, the membrane electrode assemblies in Comparative Examples 3 to 5 satisfy the formula Y≦240X-170, but the electrolysis voltages became high when applied to a water electrolysis apparatus, because a woven fabric having an aperture ratio of less than 50% was used.

Further, in the membrane electrode assemblies in Comparative Examples 6 and 7, a woven fabric having an aperture ratio of at least 50% and a denier number of warp yarns and a denier number of weft yarns being each independently at least 2, was used, but, since the formula Y≦240X-170 was not satisfied, the electrolysis voltages became high when the membrane electrode assemblies were applied to a water electrolysis apparatus.

Further, although the membrane electrode assembly in Comparative Example 8 satisfies the formula of Y≦240X-170, since a woven fabric having each of the denier number of warp yarns and the denier number of weft yarns being less than 2 was used, the strength of the membrane electrode assembly was inferior.

REFERENCE SYMBOLS

10: Polymer electrolyte membrane
12: Electrolyte
14: Woven fabric
14a, 14b and 14c: Yarns
20: Membrane electrode assembly
22: Anode
24: Cathode
26: Catalyst layer
28: Gas diffusion layer
t1, t2, t3, t4, t5, t6, t7, t8 and t9: Thicknesses

## Claims

1. A membrane electrode assembly for use in a water electrolysis apparatus, comprising an anode having a catalyst layer, a cathode having a catalyst layer, and a polymer electrolyte membrane disposed between the anode and the cathode, wherein

    the polymer electrolyte membrane comprises a fluorinated polymer having ion exchange groups, and a woven fabric,
    the aperture ratio of the woven fabric is at least 50%,
    the denier number of warp yarns and the denier number of weft yarns, constituting the woven fabric, are each independently at least 15 and at most 50,
    a relation of Y≦240X-170 is satisfied, where the membrane thickness of the polymer electrolyte membrane is Y μm, and the ion exchange capacity of the fluorinated polymer is X meq/g dry resin,
    the density of the warp yarns and weft yarns constituting the woven fabric is at least 28 yarns/cm (70 yarns/inch) and at most 59.1 yarns/cm (150 yarns/inch),
    the membrane thickness Y of the polymer electrolyte membrane is at least 70 μm and at most 150 μm, and
    the aperture ratio is measured by the method disclosed in the description.

2. The membrane electrode assembly according to Claim 1, wherein the aperture ratio of the woven fabric is at least 60% and at most 80%.

3. The membrane electrode assembly according to Claim 1 or 2, wherein the warp yarns and weft yarns constituting the woven fabric are composed of a material selected from the group consisting of a polytetrafluoroethylene, a tetrafluoroethylene-perfluoroalkyl vinyl ether copolymer, a polyether ether ketone, and a polyphenylene sulfide.

4. The membrane electrode assembly according to any one of Claims 1 to 3, wherein the ion exchange groups are sulfonic acid type functional groups.

5. The membrane electrode assembly according to any one of Claims 1 to 4, wherein the fluorinated polymer contains

units based on a fluorinated olefin and units having a sulfonic acid type functional group and a fluorine atom.

6. The membrane electrode assembly according to Claim 5, wherein the fluorinated olefin is a $C_{2-3}$ fluoroolefin having at least 1 fluorine atom in the molecule.

7. The membrane electrode assembly according to Claim 5, wherein the units having a sulfonic acid type functional group and a fluorine atom are units represented by the formula (1):

Formula (1) $-[CF_2-CF(-L-(SO_3M)_n)]-$

where L is an n+1 valent perfluorohydrocarbon group which may contain an etheric oxygen atom, M is a hydrogen atom, an alkali metal or a quaternary ammonium cation, and n is 1 or 2.

8. A water electrolysis apparatus containing a membrane electrode assembly as defined in any one of Claims 1 to 7.

9. A polymer electrolyte membrane comprising a fluorinated polymer having ion exchange groups, and a woven fabric, wherein

the aperture ratio of the woven fabric is at least 50%,
the denier number of warp yarns and the denier number of weft yarns, constituting the woven fabric, are each independently at least 15 and at most 50,
a relation of Y≦240X-170 is satisfied, where the membrane thickness of the polymer electrolyte membrane is Y µm, and the ion exchange capacity of the fluorinated polymer is X meq/g dry resin,
the density of the warp yarns and weft yarns constituting the woven fabric is at least 28 yarns/cm (70 yarns/inch) and at most 59.1 yarns/cm (150 yarns/inch),
the membrane thickness Y of the polymer electrolyte membrane is at least 70 µm and at most 150 µm, and wherein the aperture ratio is measured by the method disclosed in the description.

## Patentansprüche

1. Membranelektrodeneinheit zur Verwendung in einer Wasserelektrolysevorrichtung, umfassend eine Anode mit einer Katalysatorschicht, eine Kathode mit einer Katalysatorschicht und eine zwischen der Anode und der Kathode angeordnete Polymerelektrolytmembran, wobei

die Polymerelektrolytmembran ein fluoriertes Polymer mit Ionenaustauschgruppen und ein Gewebe umfasst,
der Öffnungsgrad des Gewebes mindestens 50% beträgt,
die Denierzahl der Kettfäden und die Denierzahl der Schussfäden, aus denen das Gewebe aufgebaut ist, jeweils unabhängig voneinander mindestens 15 und höchstens 50 betragen,
eine Beziehung Y≦240X-170 erfüllt ist, wobei die Membrandicke der Polymerelektrolytmembran Y µm beträgt und die Ionenaustauschkapazität des fluorierten Polymers X meq/g Trockenharz beträgt,
die Dichte der Kett- und Schussfäden, aus denen das Gewebe aufgebaut ist, mindestens 28 Fäden/cm (70 Fäden/Zoll) und höchstens 59,1 Fäden/cm (150 Fäden/Zoll) beträgt,
die Membrandicke Y der Polymerelektrolytmembran mindestens 70 µm und höchstens 150 µm beträgt, und wobei der Öffnungsgrad nach dem in der Beschreibung offenbarten Verfahren gemessen wird.

2. Membranelektrodeneinheit nach Anspruch 1, wobei der Öffnungsgrad des Gewebes mindestens 60% und höchstens 80% beträgt.

3. Membranelektrodeneinheit nach Anspruch 1 oder 2, wobei die Kett- und Schussfäden, aus denen das Gewebe aufgebaut ist, aus einem Material zusammengesetzt sind, das aus der Gruppe ausgewählt ist, die aus einem Polytetrafluorethylen, einem Tetrafluorethylen-Perfluoralkylvinylether-Copolymer, einem Polyetheretherketon und einem Polyphenylensulfid besteht.

4. Membranelektrodeneinheit nach einem der Ansprüche 1 bis 3, wobei die Ionenaustauschgruppen funktionelle Gruppen vom Sulfonsäuretyp sind.

5. Membranelektrodeneinheit nach einem der Ansprüche 1 bis 4, wobei das fluorierte Polymer Einheiten auf Basis eines

fluorierten Olefins und Einheiten mit einer funktionellen Gruppe vom Sulfonsäuretyp und einem Fluoratom enthält.

6. Membranelektrodeneinheit nach Anspruch 5, wobei das fluorierte Olefin ein $C_{2-3}$-Fluorolefin mit mindestens einem Fluoratom im Molekül ist.

7. Membranelektrodeneinheit nach Anspruch 5, wobei die Einheiten mit einer funktionellen Gruppe vom Sulfonsäuretyp und einem Fluoratom durch die Formel (1) dargestellt werden:

Formel (1) $-[CF_2-CF(-L-(SO_3M)_n)]-$

wobei L eine n+1-wertige Perfluorkohlenwasserstoffgruppe ist, die ein etherisches Sauerstoffatom enthalten kann, M ein Wasserstoffatom, ein Alkalimetall oder ein quaternäres Ammoniumkation ist und n 1 oder 2 ist.

8. Wasserelektrolysevorrichtung, die eine Membranelektrodeneinheit nach einem der Ansprüche 1 bis 7 enthält.

9. Polymerelektrolytmembran, umfassend ein fluoriertes Polymer mit Ionenaustauschgruppen und ein Gewebe, wobei

der Öffnungsgrad des Gewebes mindestens 50 % beträgt,
die Denierzahl der Kettfäden und die Denierzahl der Schussfäden, aus denen das Gewebe aufgebaut ist, jeweils unabhängig voneinander mindestens 15 und höchstens 50 betragen,
eine Beziehung $Y \leqq 240X-170$ erfüllt ist, wobei die Membrandicke der Polymerelektrolytmembran Y μm beträgt und die Ionenaustauschkapazität des fluorierten Polymers X meq/g Trockenharz beträgt,
die Dichte der Kett- und Schussfäden, aus denen das Gewebe aufgebaut ist, mindestens 28 Fäden/cm (70 Fäden/Zoll) und höchstens 59,1 Fäden/cm (150 Fäden/Zoll) beträgt,
die Membrandicke Y der Polymerelektrolytmembran mindestens 70 μm und höchstens 150 μm beträgt, und wobei der Öffnungsgrad nach dem in der Beschreibung offenbarten Verfahren gemessen wird.

## Revendications

1. Assemblage membrane-électrode à utiliser dans un dispositif d'électrolyse de l'eau, comprenant une anode ayant une couche de catalyseur, une cathode ayant une couche de catalyseur, et une membrane polymère comme électrolyte, disposée entre l'anode et la cathode, dans lequel :

la membrane polymère d'électrolyte comprend un polymère fluoré comportant des groupes échangeurs d'ions, et une étoffe tissée,
le taux d'ouverture de l'étoffe tissée est d'au moins 50 %,
le nombre de deniers de fils de chaine et le nombre de deniers de fils de trame, qui constituent l'étoffe tissée, s'élèvent chacun indépendamment, à au moins 15 et à 50 au plus,
la relation $Y \leq 240X-170$ est satisfaite, où l'épaisseur de membrane de la membrane polymère d'électrolyte est Y μm, et la capacité d'échange d'ions du polymère fluoré vaut X méq/g de résine sèche,
la densité des fils de chaine et des fils de trame composant l'étoffe tissée est d'au moins 28 fils/cm (70 fils/pouce) et de 59,1 fils/cm (150 fils/pouce) au plus,
l'épaisseur de membrane Y de la membrane polymère d'électrolyte est d'au moins 70 μm et de 150 μm au plus, et le taux d'ouverture est mesuré par le procédé décrit dans la description.

2. Assemblage membrane-électrode selon la revendication 1, dans lequel le taux d'ouverture de l'étoffe tissée est d'au moins 60 % et de 80 % au plus.

3. Assemblage membrane-électrode selon la revendication 1 ou 2, dans lequel les fils de chaine et les fils de trame composant l'étoffe tissée sont composés d'un matériau choisi parmi le groupe consistant en un polytétrafluoroéthylène, un copolymère tétrafluoroéthylène- perfluoroalkylvinyléther, une polyéther-éther-cétone, et un poly(sulfure de phénylène).

4. Assemblage membrane-électrode selon l'une quelconque des revendications 1 à 3, dans lequel les groupes d'échange d'ions sont des groupes fonctionnels de type acide sulfonique.

5. Assemblage membrane-électrode selon l'une quelconque des revendications 1 à 4, dans lequel le polymère fluoré

contient des unités à base d'oléfine fluorée et des unités comportant un groupe fonctionnel de type acide sulfonique et un atome de fluor.

6. Assemblage membrane-électrode selon la revendication 5, dans lequel l'oléfine fluorée est une fluoro-oléfine en $C_{2-3}$, ayant au moins un atome de fluor dans la molécule.

7. Assemblage membrane-électrode selon la revendication 5, dans lequel les unités comportant un groupe fonctionnel de type acide sulfonique et un atome de fluor sont des unités représentées par la formule (1) :

Formule (1) $-[CF_2-CF(-L-(SO_3M)_n)]-$

dans laquelle L est un groupe perfluorohydrocarbone de valence n+1, qui peut contenir un atome d'oxygène d'éther, M est un atome d'hydrogène, un métal alcalin ou un cation ammonium quaternaire, et n vaut 1 ou 2.

8. Dispositif d'électrolyse de l'eau comprenant un assemblage membrane-électrode tel que défini dans l'une quelconque des revendications 1 à 7.

9. Membrane polymère d'électrolyte comprenant un polymère fluoré comportant des groupes échangeurs d'ions, et une étoffe tissée, dans laquelle

le taux d'ouverture de l'étoffe tissée est d'au moins 50 %,
le nombre de deniers de fils de chaine et le nombre de deniers de fils de trame, qui constituent l'étoffe tissée, s'élèvent chacun indépendamment, à au moins 15 et à 50 au plus,
la relation $Y \leq 240X-170$ est satisfaite, où l'épaisseur de membrane de la membrane polymère d'électrolyte est Y μm, et la capacité d'échange d'ions du polymère fluoré vaut X méq/g de résine sèche,
la densité des fils de chaine et des fils de trame composant l'étoffe tissée est d'au moins 28 fils/cm (70 fils/pouce) et de 59,1 fils/cm (150 fils/pouce) au plus,
l'épaisseur de membrane Y de la membrane polymère d'électrolyte est d'au moins 70 μm et de 150 μm au plus, et le taux d'ouverture est mesuré par le procédé décrit dans la description.

Fig. 1

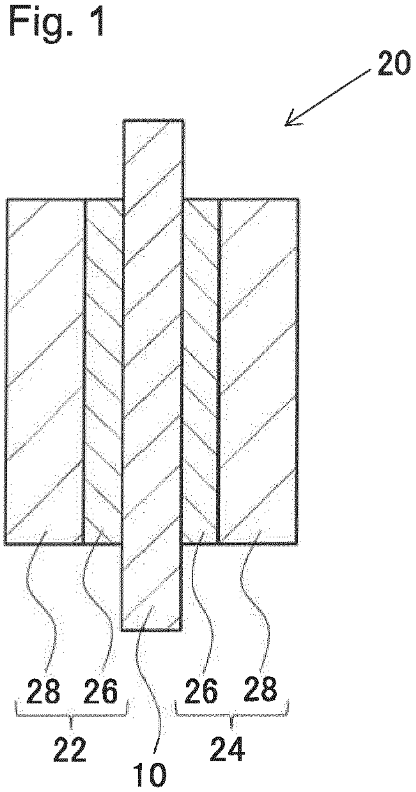


Fig. 2

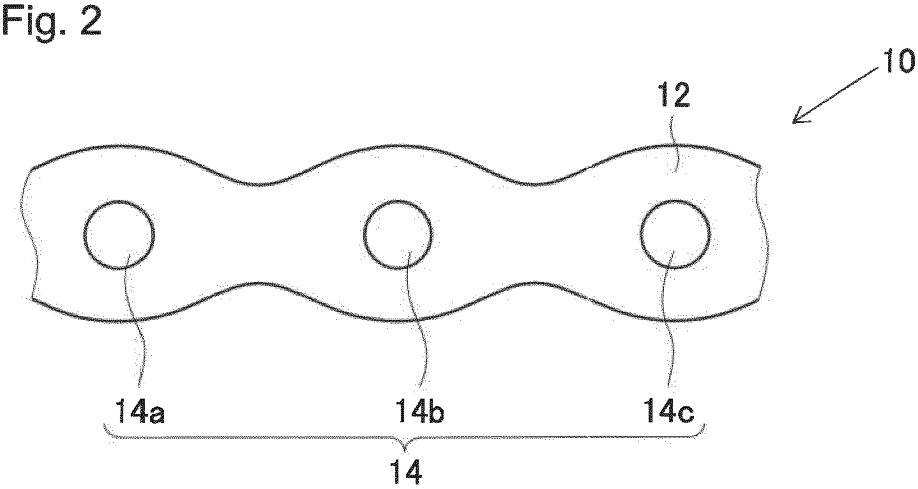


Fig. 3

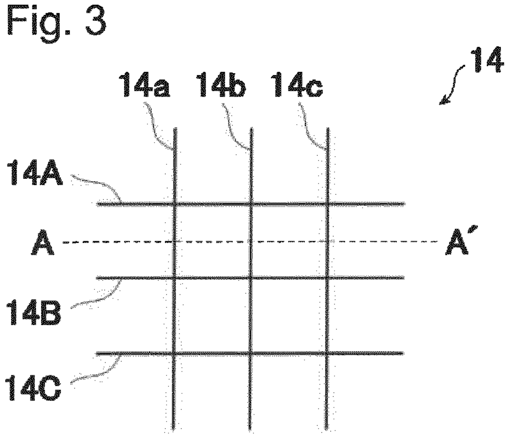

Fig. 4

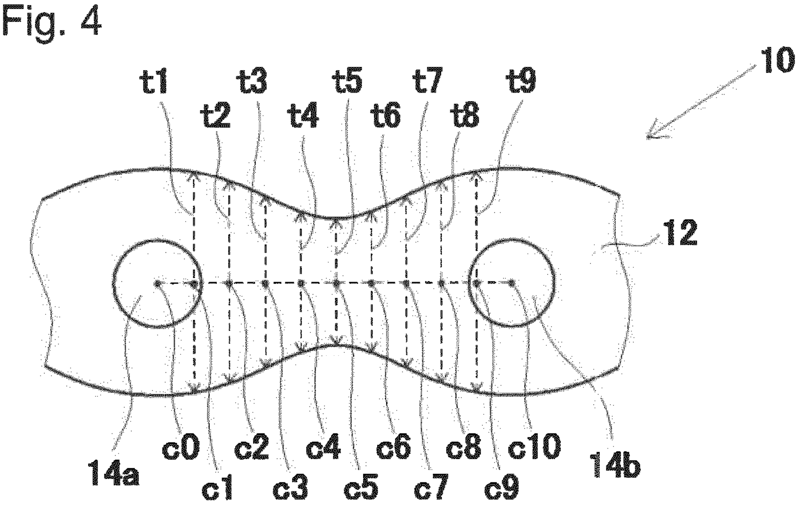
10
t1
t2
t3
t4
t5
t6
t7
t8
t9
12
14a
c0
c1
c2
c3
c4
c5
c6
c7
c8
c9
c10
14b

Fig. 5

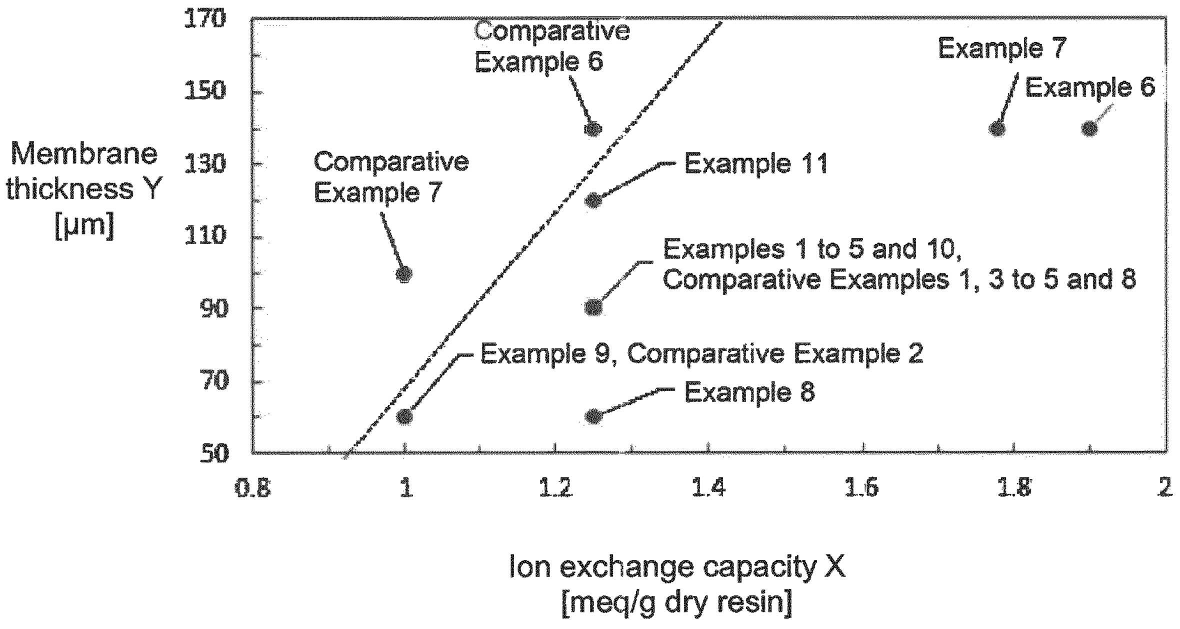
Membrane thickness Y [μm]
170
150
130
110
90
70
50
0.8
1
1.2
1.4
1.6
1.8
2
Ion exchange capacity X [meq/g dry resin]
Comparative Example 6
Example 7
Example 6
Comparative Example 7
Example 11
Examples 1 to 5 and 10, Comparative Examples 1, 3 to 5 and 8
Example 9, Comparative Example 2
Example 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11021687 A
- JP 2005078895 A
- JP 2018159129 A
- TW 201840907 A
- JP H06306193 A